# FASCICULE DE BREVET EUROPEEN

(11) **EP 3 948 899 B1**
(45) Date de publication et mention de la délivrance du brevet: **15.03.2023**
(21) Numéro de dépôt: 20722586.3
(22) Date de dépôt: 30.04.2020
(51) Int. Cl.: G21F 3/00, G21K 1/02, F16M 11/06, F16M 11/18

(54) **TÊTE DE LOGEMENT POUR UN INSTRUMENT COMPRENANT UNE PIÈCE MOBILE**
GEHÄUSEKOPF FÜR EIN INSTRUMENT MIT EINEM BEWEGLICHEN TEIL
HOUSING HEAD FOR AN INSTRUMENT COMPRISING A MOVABLE PART

(30) Priorité: 17.05.2019 FR 1905175
(43) Date de publication de la demande: 09.02.2022
(73) Titulaire: Orano DS - Démantèlement Et Services, 91196 Gif Sur Yvette Cedex (FR)
(72) Inventeur: ESCOFFIER, Cédric, 30200 Bagnols-sur-Ceze (FR); VIAL, Damien, 84420 Piolenc (FR)
(74) Mandataire: Brevalex
(86) Numéro de dépôt international: PCT/EP2020/062135
(87) Numéro de publication internationale: WO 2020/233963

(56) Documents cités:
- US-A- 4 680 470
- US-A1- 2017 176 605

## Description

### DOMAINE TECHNIQUE

L'invention porte sur une tête de logement d'un instrument pour un travail en milieu hostile et inadapté à une intervention humaine, notamment en milieu radioactif tel qu'une installation du cycle du combustible nucléaire, de production d'énergie nucléaire, ou bien un laboratoire, un réacteur ou une installation de recherche mettant en oeuvre des matières nucléaires. Plus précisément, elle concerne une détection en milieu radioactif.

La tête de logement permet d'une part d'orienter l'instrument dans différentes directions, d'autre part de protéger l'instrument contre les effets du milieu ambiant.

Une tête d'inspection de fissures, de structure connue, est divulguée dans le document US 4, 680, 470.

### ÉTAT DE LA TECHNIQUE ANTÉRIEURE

Les solutions existantes permettant à la fois d'orienter un instrument dans différentes directions et de le protéger de son environnement sont lourdes et encombrantes.

A titre d'exemple, pour réaliser des mesures précises des rayonnements X et/ou gamma issus d'une source radioactive dans une ambiance radiologique élevée, il est nécessaire d'utiliser des collimateurs de structures connues, fixés à des mâts de support et au sein desquels sont logés des détecteurs de rayonnement X et/ou gamma. Ces collimateurs sont de forme cylindrique. Chaque collimateur permet d'isoler radiologiquement un détecteur, tout en permettant de réaliser une détection en milieu radioactif. L'utilisation de ces collimateurs et des détecteurs au bout d'un mât de support permet de protéger les opérateurs contre les radiations.

Afin de pouvoir positionner au mieux un collimateur et le détecteur qu'il loge relativement à la source de radioactivité, le bout du mât de support est équipé d'un support qui est orientable dans différents plans, ce qui vient ajouter à l'encombrement et à la masse de l'appareillage de mesure.

Néanmoins, certains espaces réduits sont inaccessibles pour ces collimateurs d'une part, et les champs d'observation des détecteurs, c'est-à-dire les angles solides de détection, qu'ils logent sont limités d'autre part. Il est donc souvent nécessaire de déplacer ces collimateurs, ce qui peut être complexe compte tenu de l'encombrement des zones à investiguer et ce qui augmente le risque d'exposer un opérateur à des radiations. Par ailleurs, il est souvent difficile de positionner le détecteur dans l'axe de la source de radioactivité à mesurer, ceci impliquant un traitement nécessaire des données de mesure obtenues pour les corriger par calcul.

### EXPOSÉ DE L'INVENTION

L'invention vise à résoudre au moins partiellement les problèmes rencontrés dans les solutions de l'art antérieur.

A cet égard, l'invention a pour objet une tête de logement d'un instrument. La tête est au moins partiellement sphérique. La tête comprend une première pièce et une deuxième pièce qui est mobile par rapport à la première pièce.

La première pièce comprend un corps et un embout de raccordement. L'embout de raccordement est configuré pour solidariser rigidement la première pièce à un mât de support.

La deuxième pièce comprend une calotte sphérique. La deuxième pièce comprend une lumière qui débouche sur l'extérieur de la tête et qui débouche dans un logement pour l'instrument. Le logement est situé à l'intérieur de la tête. La deuxième pièce est mobile au moins en rotation par rapport à la première pièce autour d'un axe de rotation qui est conçu pour être incliné par rapport à un axe longitudinal du mât de su pport.

Le corps a une forme de sphère tronquée par une surface de jonction de la deuxième pièce à la première pièce qui est sensiblement plane. La surface de jonction de la deuxième pièce à la première pièce est inclinée par rapport à un axe longitudinal du mât de support, et/ou l'axe longitudinal de la lumière est incliné par rapport à la surface de jonction de la deuxième pièce à la première pièce.

Grâce à la tête selon l'invention, il est possible de réaliser plus facilement un travail dans un milieu hostile et inadapté à une intervention humaine, tel qu'un milieu radioactif, tout en limitant la masse et l'encombrement de l'appareillage comprenant la tête et l'instrument qui est logé dans la tête et en assurant la protection de l'instrument vis-à-vis du milieu ambiant.

En particulier, il est possible de réaliser grâce à la tête un travail dans un espace réduit ou difficilement accessible, de manière fiable et en étant capable de repérer la position de travail de l'instrument.

Par exemple, l'instrument permet de réaliser des opérations d'observation, auquel cas l'instrument peut être une caméra, des opérations de mesure de distance, auquel cas l'instrument peut être un télémètre, des travaux de découpe, auquel cas l'instrument peut être une tête laser, de décontamination, auquel cas l'instrument peut être une tête laser ou une buse pour la projection de produit de décontamination.

La mobilité en rotation de la deuxième pièce relativement à la première pièce accroît le champ d'observation/d'action de l'instrument, sachant notamment que le mât de raccordement est susceptible d'être déplacé en translation et/ou en rotation par un opérateur, directement ou à distance, par télé opération ou télémanipulation.

La forme partiellement sphérique de la tête permet d'en optimiser la masse et l'encombrement. La tête a une forme géométrique simple, ce qui la rend plus facile à réaliser, et le cas échéant à nettoyer et/ou à décontaminer.

La surface de jonction de la deuxième pièce à la première pièce est sensiblement plane. La surface de jonction peut être non plane par endroits pour limiter les lignes de fuite à la jonction entre la première pièce et la deuxième pièce, ce qui permet de mieux protéger ou isoler l'instrument de l'environnement de la tête. Tout au moins, la majorité de la surface de jonction est plane.

Du fait de l'inclinaison de la surface de jonction par rapport à l'axe longitudinal du mât de support, le champ d'observation/ d'action de l'instrument est agrandi.

L'invention peut comporter de manière facultative une ou plusieurs des caractéristiques suivantes combinées entre elles ou non.

Selon une particularité de réalisation, la première pièce comprend sensiblement un hémisphère et la deuxième pièce comprend un hémisphère.

Selon une autre particularité de réalisation, l'embout de raccordement a une forme cylindrique, l'axe longitudinal de l'embout de raccordement étant de préférence conçu pour être parallèle à l'axe longitudinal du mât de support.

Selon une particularité de réalisation, la lumière est délimitée par une surface de révolution, préférentiellement un cône, un tronc de cône ou un cylindre circulaire droit.

Selon une particularité de réalisation, la lumière débouche dans le logement sensiblement au centre de la tête. Le travail réalisé à partir de l'instrument tend à être facilité, ainsi que l'alimentation de l'instrument à l'intérieur de la tête.

Selon une autre particularité de réalisation, la lumière constitue le logement pour l'instrument. Il s'agira par exemple de tout instrument de petite taille, utilisable pour des opérations en milieu hostile et inadapté à une intervention humaine.

Selon une autre particularité de réalisation, l'axe longitudinal de la lumière est destiné à être sécant à l'axe longitudinal du mât de support.

De préférence, un axe perpendiculaire à la surface de jonction est également incliné par rapport à l'axe longitudinal du mât de support.

Selon une particularité de réalisation, l'axe longitudinal de la lumière est incliné par rapport à la surface de jonction d'un angle qui est compris entre 25° et 155°, de préférence entre 25° et 85° et entre 95° et 155°, très préférablement sensiblement 25°.

Selon une particularité de réalisation, la surface de jonction est inclinée par rapport à l'axe longitudinal du mât de support d'un angle qui est compris entre 25° et 155°, de préférence entre 25° et 85° et entre 95° et 155°, très préférablement sensiblement 25°.

Selon une autre particularité de réalisation, l'angle d'inclinaison de la lumière relativement à la surface de jonction est sensiblement égal à l'angle d'inclinaison de la surface de jonction relativement à l'axe longitudinal du mât de support. Ces angles d'inclinaison sont préférentiellement faibles ce qui permet d'accroître le champ d'observation / d'action de l'instrument, c'est-à-dire l'angle solide d'action/d'observation de l'instrument.

Selon une particularité de réalisation, la première pièce et/ou la deuxième pièce comprend un matériau de blindage contre les rayonnements radioactifs tel qu'un rayonnement X et/ou un rayonnement gamma.

Selon une particularité de réalisation, la première pièce et/ou la deuxième pièce comprend un matériau d'isolation thermique, chimique, bactériologique, électrique et/ou magnétique.

Ainsi, la tête est adaptée en fonction de l'environnement pour assurer la protection de l'instrument qu'elle loge. Ainsi, lorsque l'instrument logé dans le logement de la tête est un appareil de mesure de rayonnements radiologiques, la lumière réalisée dans la deuxième pièce constituée d'un matériau de blindage permet d'assurer la fonction de collimation et la tête est alors une tête de collimation.

L'invention porte également sur un collimateur comprenant une tête telle que définie ci-dessus, la tête alors une tête de collimation qui est conçue pour loger un détecteur de rayonnements radioactifs.

L'invention se rapporte aussi à un appareil comprenant une tête telle que définie ci-dessus ainsi que le mât de support.

De préférence, l'appareil est un appareil de collimation, notamment lorsque la tête comprend un matériau de blindage contre les rayonnements radioactifs tel qu'un rayonnement X et/ou un rayonnement gamma.

Selon une particularité de réalisation, l'appareil comprend un actionneur qui est configuré pour déplacer la deuxième pièce relativement à la première pièce.

Selon une particularité de réalisation, l'actionneur comprend un arbre d'entrainement dont l'axe longitudinal est destiné à être parallèle à l'axe longitudinal du mât de support.

Selon une particularité de réalisation, l'actionneur comprend un dispositif de transmission. Avantageusement, le dispositif de transmission comprend un premier élément de transmission et un deuxième élément de transmission.

Selon une particularité de réalisation, le dispositif de transmission comprend un engrenage à renvoi d'angle, notamment un engrenage conique.

Un engrenage conique a l'avantage d'être fiable et robuste, de présenter un rendement et un taux de réduction satisfaisants, d'être de structure simple et d'être peu coûteux.

Selon une particularité de réalisation, le premier élément de transmission est logé dans la première pièce.

Selon une particularité de réalisation, le deuxième élément de transmission est rigidement solidaire de la deuxième pièce.

Le deuxième élément de transmission est par exemple fixé à la deuxième pièce. En variante, le deuxième élément de transmission est monobloc avec la deuxième pièce, en faisant partie de la deuxième pièce.

Selon une particularité de réalisation, l'appareil comprend un dispositif de contrôle de position de la lumière relativement à l'axe longitudinal du mât de support.

Le dispositif de contrôle de position permet ainsi de réaliser un travail précis au moyen de l'instrument qui est porté par la tête, tout en protégeant l'opérateur de l'environnement dans lequel est positionnée la tête.

L'invention se rapporte aussi à un appareillage de contrôle, c'est-à-dire à un appareillage de mesure et/ou à un appareillage de surveillance. L'appareillage de contrôle comprend une tête telle que définie ci-dessus ou un appareil tel que défini ci-dessus, notamment un appareil de collimation. L'appareillage de contrôle comporte aussi un instrument qui est logé au moins partiellement dans le logement de la tête. L'instrument est préférablement un instrument de mesure.

Selon une particularité de réalisation, l'instrument comprend un détecteur, notamment un détecteur de rayonnement X et/ou un détecteur de rayonnement gamma.

L'appareillage de contrôle facilite voire même rend possible la réalisation d'opérations de contrôle précis (grâce à la collimation) et étendu (grâce au balayage d'un volume significatif de l'environnement à investiguer), notamment en milieu radioactif, réalisées au moyen du détecteur et d'une tête ou d'un appareil tels que définis ci-dessus, tout en limitant la masse et l'encombrement de l'appareillage de contrôle ainsi que l'exposition d'un opérateur à un environnement hostile et inadapté à une intervention humaine tel qu'un environnement radioactif.

Selon une particularité de réalisation, le détecteur s'étend à l'intérieur de la tête de manière à ce que l'axe longitudinal du détecteur soit parallèle à l'axe longitudinal du mât de support.

Selon une autre particularité de réalisation, l'appareillage de contrôle comprend un moyen d'alimentation électrique ou de transmission d'un signal du détecteur.

Selon une particularité de réalisation, le moyen d'alimentation électrique ou de transmission du signal du détecteur s'étend à l'intérieur de la tête sensiblement le long de l'axe longitudinal du mât de support.

Ainsi, les risques d'endommager un câble d'alimentation électrique ou de transmission du signal du détecteur lors de déplacements de la deuxième pièce par rapport à la première pièce sont réduits.

Enfin, l'invention a trait à un procédé de fabrication d'une tête telle que définie ci-dessus ou d'un appareil tel que défini ci-dessus, notamment un appareil de collimation. La tête est réalisée dans un unique matériau ou dans plusieurs matériaux. Dans ce dernier cas, un premier matériau est situé autour d'un deuxième matériau distinct du premier matériau. Le premier matériau est choisi pour être plus résistant mécaniquement et pour être facilement décontaminable tandis que le deuxième matériau est choisi pour sa capacité d'absorption des rayonnements, d'isolation mécanique, radiologique, thermique, chimique, bactériologique, électrique et/ou magnétique.

Selon un mode préféré, le procédé de fabrication comprend une étape de fabrication d'une peau extérieure de la tête dans le premier matériau. De manière encore préférée, cette étape de fabrication est réalisée en fabrication additive.

Selon une particularité de réalisation, le deuxième matériau est un matériau de blindage contre un rayonnement radioactif, tel qu'un rayonnement X et/ou un rayonnement gamma.

De préférence, le premier matériau comprend de l'acier inoxydable.

De préférence, le deuxième matériau comprend du plomb, du cuivre et/ou du tungstène.

La tête présente une résistance mécanique et thermique satisfaisante du fait de la peau extérieure en premier matériau, tout en protégeant l'instrument contre les radiations environnantes.

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- la figure 1 est une représentation schématique partielle en perspective d'un appareillage de contrôle, selon un premier mode de réalisation de l'invention, dans lequel un orifice de détection est orienté dans une première direction;
- la figure 2 est une représentation schématique partielle en perspective de l'appareillage de contrôle, dans lequel un orifice de détection est orienté dans une deuxième direction;
- la figure 3 est une vue schématique partielle et éclatée de l'appareillage de contrôle;
- la figure 4 est une représentation schématique partielle en vue de dessus de l'appareillage de contrôle;
- la figure 5 est une représentation schématique partielle en coupe longitudinale de l'appareillage de contrôle;
- la figure 6 est une représentation schématique partielle en coupe longitudinale de la deuxième pièce mobile de l'appareillage de contrôle ;
- la figure 7 est une représentation schématique partielle en perspective d'un appareillage de contrôle, selon un deuxième mode de réalisation de l'invention.

### EXPOSÉ DÉTAILLÉ DE MODES DE RÉALISATION PARTICULIERS

Des parties identiques, similaires ou équivalentes des différentes figures portent les mêmes références numériques de façon à faciliter le passage d'une figure à l'autre.

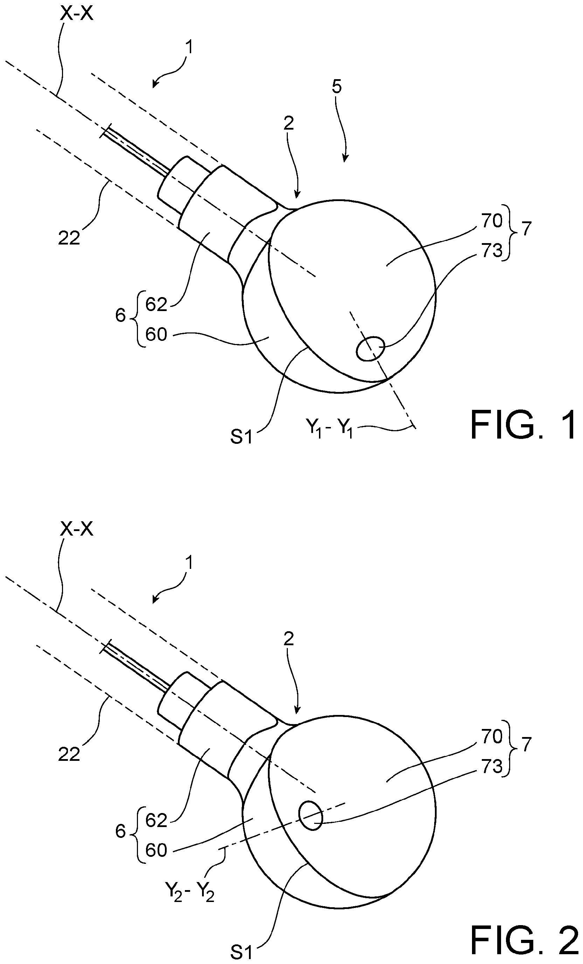

Les figures 1 à 6 représentent un appareillage de contrôle, dans le cas présent un appareillage de mesure 1, en milieu radioactif, selon un premier mode de réalisation. Ce milieu radioactif peut être par exemple un équipement industriel nucléaire tel qu'un conduit de circuit primaire d'un réacteur nucléaire, une cuve d'entreposage de matière radioactive ou un colis d'entreposage de matière radioactive.

L'appareillage de mesure 1 présente un axe longitudinal X-X qui correspond à un axe longitudinal d'un mât de support 22. Une direction axiale est une direction parallèle à la direction longitudinale X-X de l'appareillage de mesure 1.

L'appareillage de mesure 1 est configuré pour mesurer un rayonnement X et/ou un rayonnement gamma en milieu radioactif précisément issu d'une source radiologique donnée, tout en protégeant radiologiquement un détecteur 3 qui est logé dans une tête 5 de l'appareillage de mesure 1.

L'appareillage de mesure 1 comprend un appareil 2 et un détecteur 3. Dans le mode de réalisation représenté, l'appareil 2 est un appareil de collimation. L'appareil de collimation 2 comprend un mât de support 22, la tête 5 configurée pour loger le détecteur 3, et un actionneur 8 qui est logé au moins partiellement à l'intérieur de la tête 5 et au moins partiellement à l'intérieur du mât 22.

L'appareil de collimation 2 comprend en outre un dispositif de contrôle de position (non représenté) pour contrôler la position d'une lumière 73 qui traverse une peau extérieure 52 de la tête 5.

Le mât de support 22 est destiné à être introduit dans une ouverture du milieu radioactif. Il est conçu pour être déplacé dans le milieu radioactif par un opérateur, directement ou à distance, par télé opération ou télémanipulation, tout en protégeant l'opérateur contre la radioactivité.

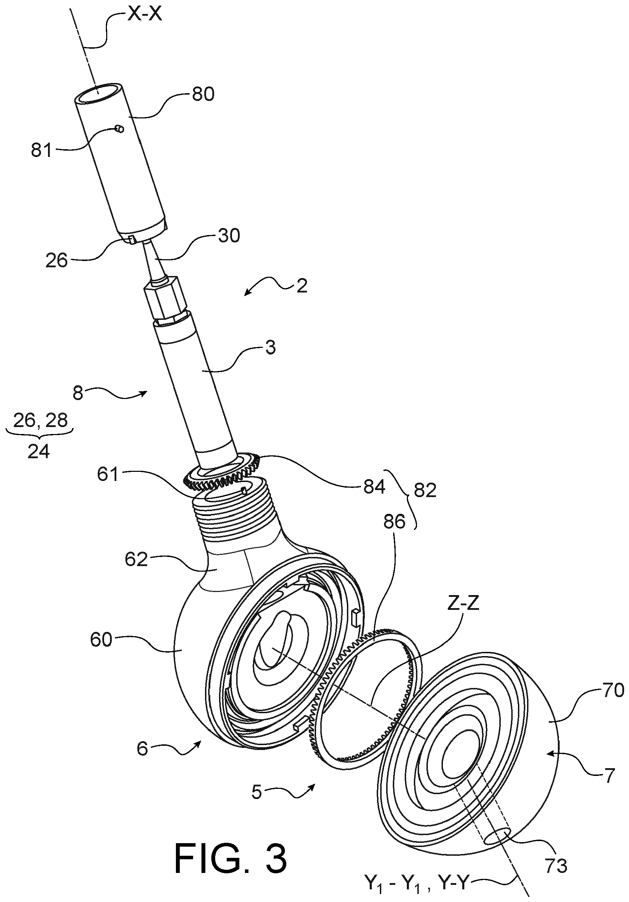

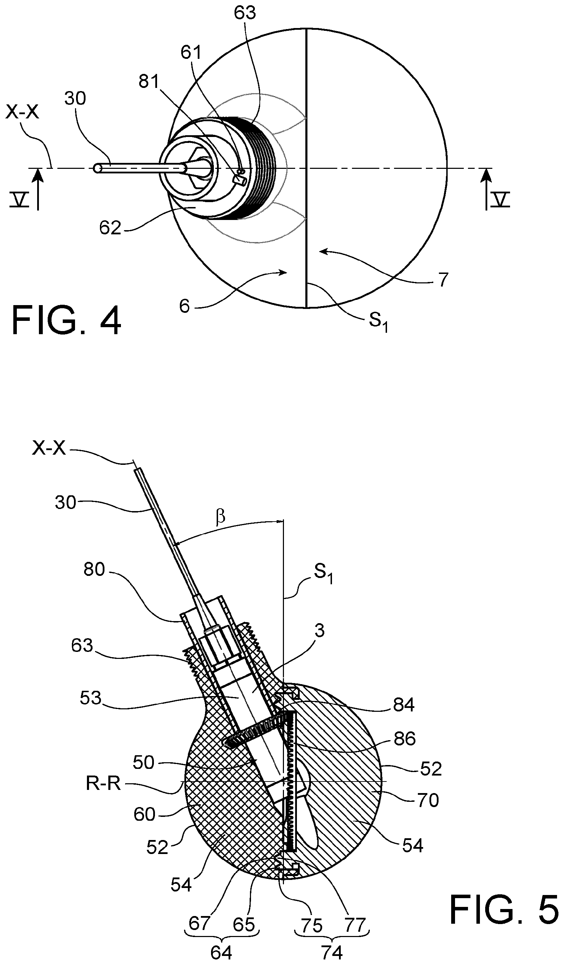

En référence plus spécifiquement aux figures 3 et 5, le détecteur 3 forme un instrument de l'appareillage 1. Dans les deux modes de réalisation représentés, le détecteur 3 est un détecteur de rayonnement X et/ou de rayonnement gamma, par exemple une sonde. Le détecteur 3 peut également comprendre un autre instrument de mesure, par exemple de distance tel qu'un télémètre, ou une caméra.

De manière générale, le détecteur 3 est logé au moins partiellement dans une pièce 6 de la tête 5. Dans les modes de réalisation représentés, le détecteur 3 est rigidement solidaire du mât de support 22. L'axe longitudinal du détecteur est parallèle à l'axe longitudinal X-X du mât de support 22.

L'appareillage de mesure 1 comprend un moyen d'alimentation électrique et de transmission du signal 30 pour alimenter électriquement le détecteur 3 et pour transmettre un signal provenant du détecteur 3. Ce moyen d'alimentation et de transmission du signal 30 comprend au moins un câble électrique et/ou optique qui est logé à l'intérieur du mât de support 22 et à l'intérieur de la tête 5, en étant raccordé électriquement/ optiquement au détecteur 3.

La tête 5 a une forme partiellement sphérique. Elle est configurée pour isoler radiologiquement au moins partiellement le détecteur 3, tout en permettant une mesure par le détecteur 3 du rayonnement collimaté à travers la lumière 73.

La tête 5 comprend une peau extérieure 52 et une portion interne 54 qui est entourée par la peau extérieure 52. La tête 5 comprend une première pièce 6 et une deuxième pièce 7 qui est mobile en rotation par rapport à un axe de rotation R-R relativement à la première pièce 6. La première pièce 6 et la deuxième pièce 7 sont en contact mécanique l'une de l'autre sur une surface de jonction S1 qui est sensiblement plane. La première pièce 6 et la deuxième pièce 7 délimitent conjointement un logement 50 pour le détecteur 3 à l'intérieur de la tête 5.

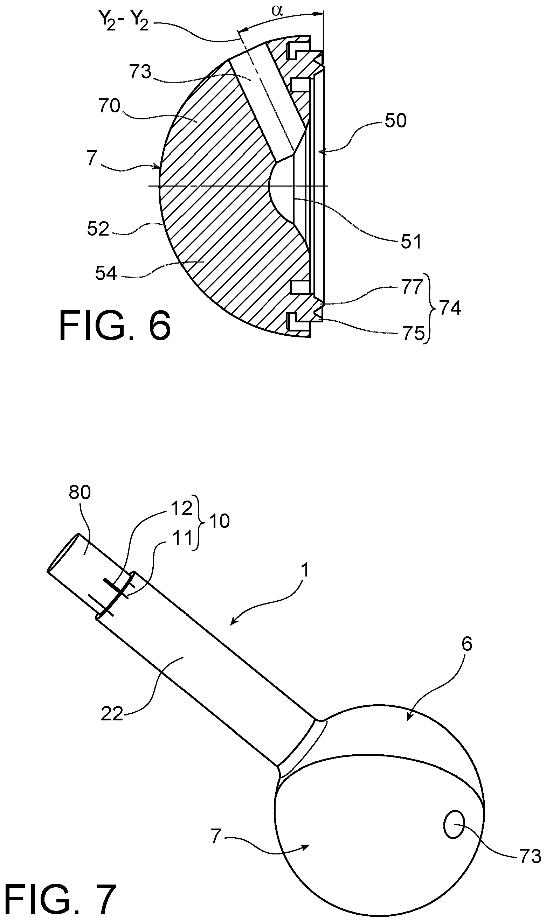

En référence plus spécifiquement aux figures 5 et 6, la peau extérieure 52 délimite la tête 5 vers l'extérieur. Elle est réalisée dans un premier matériau qui présente une résistance mécanique suffisante pour limiter les déformations de la tête 5 et qui est facilement décontaminable. Le premier matériau comprend typiquement de l'acier inoxydable.

La portion interne 54 est située à l'intérieur de la peau extérieure 52. Elle délimite le logement 50 vers l'extérieur. Elle représente la majorité du volume de matière de la tête 5. La portion interne 54 est réalisée dans un deuxième matériau qui est un matériau de blindage radiologique du détecteur 3, typiquement contre un rayonnement X et/ou un rayonnement gamma. Le deuxième matériau peut être de résistance mécanique inférieure à celle du premier matériau, mais protège mieux radiologiquement le détecteur 3 que le premier matériau. Le deuxième matériau comprend par exemple du plomb, du cuivre et/ou du tungstène.

Le logement 50 du détecteur comprend une portion cylindrique 53 qui s'étend selon l'axe longitudinal X-X du mât de raccordement et une cavité centrale 51 en forme de boule.

La portion cylindrique 53 est un cylindre circulaire droit dont la génératrice est parallèle à l'axe longitudinal X-X. Elle débouche sur l'extérieur de la tête 5 à travers l'embout de raccordement 62 de la tête 5 au mât de support 22. Elle représente la majorité du volume du logement 50. La portion cylindrique 53 forme un orifice d'introduction du détecteur 3 et du moyen d'alimentation électrique 30 du détecteur. Elle loge le moyen d'alimentation électrique 30 du détecteur. Elle loge également la majeure partie du détecteur 3, selon la direction longitudinale du détecteur. La portion cylindrique 53 est ménagée dans la première partie fixe 6 de la tête, ce qui limite les risques d'endommager le moyen d'alimentation électrique 30 et dans une moindre mesure le détecteur 3, lors de déplacements de la deuxième pièce 7 par rapport à la première pièce 6.

La cavité centrale 51 est située sensiblement au centre de la sphère partielle formée par la tête 5. La cavité centrale 51 débouche dans la portion cylindrique 53.

En référence conjointe aux figures 1 à 6, la première pièce 6 est fixe par rapport au mât de support 22. Elle comprend un corps 60, un embout de raccordement 62, un premier organe de guidage 64 et une première butée circonférentielle 61. Elle est monobloc.

L'embout de raccordement 62 est un cylindre circulaire droit dont la génératrice est parallèle à l'axe longitudinal X-X du mât de support. Il s'étend depuis le corps 60 autour de l'axe longitudinal X-X du mât de support. Il est configuré pour solidariser rigidement la tête 5 au mât de raccordement 22. Il comprend un filetage externe 63 qui est configuré pour engager mécaniquement le mât de support 22, auquel il est fixé par serrage.

Le corps 60 de la première pièce 6 a une forme générale de sphère tronquée par la surface de jonction S1. Dans les modes de réalisations représentés, il a une forme générale hémisphérique.

La deuxième pièce 7 comprend un corps 70 et un deuxième organe de guidage 74. Elle est traversée par une lumière 73 qui forme un orifice de détection pour le détecteur 3. Elle est monobloc.

Le corps 70 de la deuxième pièce a une forme de sphère tronquée par la surface de jonction S1. Le corps 70 de la deuxième pièce est de forme générale complémentaire de celle du corps 60 de la première pièce, pour former une sphère. Dans les modes de réalisations représentés, le corps 70 a une forme hémisphérique.

La lumière 73 débouche à travers le corps 70 de la deuxième pièce dans le logement 50 du détecteur 3 et sur l'extérieur de la tête 5. La lumière 73 débouche dans le logement 50 au niveau de la cavité centrale 51. Dans les modes de réalisation représentés, la lumière 73 a une forme de cylindre ou de cône droit d'axe Y-Y. L'axe longitudinal Y-Y de la lumière est sécant avec l'axe longitudinal X-X du mât de support. L'axe longitudinal Y-Y de la lumière est incliné par rapport à la surface de jonction S1, notamment d'un angle α qui est compris entre 25 et 155°, de préférence entre 25° et 85° et entre 95° et 155°. Dans les modes de réalisation représentés, l'angle α est sensiblement égal à 25°.

A la figure 1, l'axe longitudinal Y-Y de la lumière est orienté selon une première direction Y1-Y1, notamment par rapport à l'axe longitudinal X-X du mât de support, pour mesurer le rayonnement X et/ou le rayonnement gamma provenant de cette première direction Y1-Y1.

A la figure 2, l'axe longitudinal Y-Y de la lumière est orienté selon une deuxième direction Y2-Y2, notamment par rapport à l'axe longitudinal X-X du mât de support, pour mesurer le rayonnement X et/ou le rayonnement gamma provenant de cette deuxième direction Y2-Y2.

La surface de jonction S1 de la deuxième pièce à la première pièce est plane sur la majorité de sa surface, hormis notamment au niveau des organes de guidage 64, 74, qui permettent de limiter les lignes de fuites radiologiques ; elle est inclinée par rapport à l'axe longitudinal X-X du mât de support, notamment d'un angle β qui est compris entre 25 et 155°, de préférence entre 25° et 85° et entre 95° et 155°. Dans les modes de réalisation représentés, l'angle β est sensiblement égal à 25°.

La surface de jonction S1 est non plane au niveau du premier organe de guidage 64 et du deuxième organe de guidage 74, pour limiter les lignes de fuite radiologique à la jonction entre la première pièce 6 et la deuxième pièce 7. Du fait de ces ruptures de planéité de la surface de jonction S1, le détecteur 3 est mieux protégé contre la radioactivité environnante, tout en permettant une mesure plus précise du rayonnement radioactif arrivant à travers la lumière 73.

L'axe de rotation R-R de la deuxième pièce 7 relativement à la première pièce 6 est orthogonal à la surface de jonction S1. Il est incliné par rapport à l'axe longitudinal X-X du mât de support. Il est sécant avec l'axe longitudinal X-X du mât de support. Il passe par un diamètre de la cavité centrale 51, ce qui limite davantage les risques d'endommager le détecteur 3, lors des déplacements de la deuxième pièce 7 relativement à la première pièce 6.

Le premier organe de guidage 64 et le deuxième organe de guidage 74 forment conjointement un organe de guidage pour guider le déplacement de la deuxième pièce 7 relativement à la première pièce 6.

Le premier organe de guidage 64 comprend un premier évidement 65 et un deuxième évidement 67 ménagés dans le corps 60 de la première pièce 6 au niveau de la surface de jonction S1. Ces évidements 65, 67 ont chacune une forme de rainure annulaire autour de l'axe de rotation R-R de la deuxième pièce 7 relativement à la première pièce 6. Ces rainures annulaires 65, 67 sont espacées radialement l'une de l'autre relativement à l'axe de rotation R-R par une nervure annulaire.

Le deuxième organe de guidage 74 comprend une première portion en saillie 75 et une deuxième portion en saillie 77 depuis le corps 70 de la deuxième pièce 7 au niveau de la surface de jonction S1. Ces portions en saillie 75, 77 ont chacune une forme de nervure annulaire autour de l'axe de rotation R-R de la deuxième pièce 7 relativement à la première pièce 6. Ces nervures annulaires 75, 77 sont espacées radialement l'une de l'autre relativement à l'axe de rotation R-R par une rainure annulaire.

Le deuxième organe de guidage 74 est conçu pour engager mécaniquement le premier organe de guidage 64 par coopération de forme au niveau de la surface de jonction S1. Plus précisément, les portions en saillie 75, 77 de la deuxième pièce sont insérées dans les évidements 65, 67 de la première pièce 6, en permettant une rotation sans glissement de la deuxième pièce 7 relativement à la première pièce 6 le long de la surface de jonction S1, autour de l'axe de rotation R-R.

L'actionneur 8 est configuré pour entraîner le déplacement de la deuxième pièce 7 relativement à la première pièce 6. L'actionneur 8 comprend un dispositif d'entrainement et un dispositif de transmission 82.

Le dispositif d'entrainement comprend un arbre d'entrainement 80 dont l'axe longitudinal est parallèle à l'axe longitudinal X-X du mât de support 22 dans lequel il est au moins partiellement logé. L'arbre d'entrainement 80 est creux, en étant sensiblement cylindrique de section circulaire autour de l'axe longitudinal X-X du mât de support. L'intérieur de l'arbre d'entrainement 80 loge au moins partiellement le détecteur 3. L'arbre d'entrainement 80 est également logé au moins partiellement dans l'embout de raccordement 62. L'arbre d'entrainement 80 est mobile en rotation autour de son axe longitudinal, par exemple en étant entraîné par un moteur (non représenté).

Le dispositif de transmission 82 comprend un premier élément de transmission 84 et un deuxième élément de transmission 86. Le dispositif de transmission forme un engrenage à renvoi d'angle, du fait de l'inclinaison de l'axe de rotation R-R du deuxième élément de transmission 86 relativement à l'axe de rotation X-X du premier élément de transmission 84. L'axe de rotation R-R du deuxième élément de transmission 86 et l'axe de rotation X-X du premier élément de transmission 84 étant concourants, le dispositif de transmission 82 forme un engrenage conique.

Le premier élément de transmission 84 est une première roue dentée dont l'axe de révolution est parallèle à l'axe longitudinal X-X du mât de support 22 et de l'arbre d'entrainement 80. Le premier élément de transmission 84 est logé à l'intérieur de la première pièce 6 autour du détecteur 3. Le premier élément de transmission 84 est mobile en rotation relativement à la première pièce 6 et au détecteur 3. Il est solidaire en rotation de l'arbre d'entrainement 80 qui l'entraine en déplacement relativement à la première pièce 6.

Le deuxième élément de transmission 86 est une deuxième roue dentée dont l'axe de révolution est l'axe de rotation R-R de la deuxième pièce 7. Le deuxième élément de transmission 86 est situé au niveau de la surface de jonction S1 qu'il délimite au moins partiellement. Le deuxième élément de transmission 86 est entraîné en déplacement par le premier élément de transmission 84 qui l'engrène, par rapport à la première pièce 6. Il est solidaire en rotation du corps 70 de la deuxième pièce. Dans le mode de réalisation représenté, le deuxième élément de transmission 86 est rigidement solidaire du corps 70 de la deuxième pièce, en étant fixé ou monobloc avec le corps 70 de la deuxième pièce 7.

Le premier élément de transmission 82 est raccordé mécaniquement à l'arbre d'entrainement 80 en étant solidaire en rotation de l'arbre d'entrainement 80 par un dispositif de raccordement. Ce dispositif de raccordement comprend au moins un premier ergot 26 et au moins un deuxième ergot 28. Chaque premier ergot 26 est rigidement solidaire de l'arbre d'entrainement 80, en étant par exemple en saillie radialement par rapport à l'axe longitudinal de l'arbre d'entrainement 80. Chaque deuxième ergot 28 est rigidement solidaire du premier élément de transmission 84, en étant par exemple en saillie axialement le long de l'axe longitudinal de l'arbre d'entrainement 80. Chaque deuxième ergot 28 est conçu pour engager mécaniquement un des premiers ergots 26 par coopération de forme, par exemple en étant en butée en rotation contre ce premier ergot 26.

Dans le premier mode de réalisation représenté, l'arbre d'entrainement 80 comprend au moins trois premier ergots mâles 26 qui sont répartis circonférentiellement uniformément relativement à l'axe longitudinal X-X de l'arbre d'entrainement. La première roue dentée comprend au moins trois deuxièmes ergots femelles 28 qui sont répartis circonférentiellement uniformément relativement à l'axe longitudinal X-X de l'arbre d'entrainement.

L'arbre d'entrainement 80 et l'embout de raccordement 62 comportent également des butées circonférentielles 61, 81, pour limiter le déplacement en rotation de l'arbre d'entrainement 80 relativement à l'embout de raccordement 62. Les butées circonférentielles 61, 81 sont destinées à limiter la rotation de la deuxième pièce 7 relativement à la première pièce 6 autour de l'axe de rotation R-R.

La première butée circonférentielle 61 fait saillie d'un rebord supérieur de l'embout de raccordement 62 axialement le long de l'axe longitudinal X-X du mât de support. La première butée circonférentielle 61 a une forme d'appendice cylindrique.

La deuxième butée circonférentielle 81 fait saillie de l'arbre d'entrainement 80 radialement vers l'extérieur par rapport à l'axe longitudinal X-X du mât de support. La deuxième butée circonférentielle 81 a la forme d'un appendice cylindrique. Elle est configurée pour venir au contact mécanique de la première butée circonférentielle 61, en limitant la course en rotation de l'actionneur 8 relativement à la première pièce 6.

Selon un procédé de fabrication de la tête 5, la tête 5 est fabriquée en plusieurs étapes. Tout d'abord, la peau extérieure 52 de la tête est fabriquée par fabrication additive dans le premier matériau, par exemple par fusion de poudre métallique au laser. La peau extérieure 52 de la première pièce 6 est notamment fabriquée indépendamment de la peau extérieure de la deuxième pièce 7. Puis, la portion interne 54 est fabriquée à l'intérieur de la peau extérieure 52. La portion interne 54 est par exemple réalisée par fonderie, à partir du deuxième matériau.

La figure 7 représente un appareillage de mesure 1 selon un deuxième mode de réalisation. L'appareillage de mesure 1 selon le deuxième mode de réalisation se distingue de celui du premier mode de réalisation principalement en ce que le mât de support 22 est monobloc avec la tête 5 de l'appareil de collimation 2. La figure 7 représente également le dispositif de contrôle 10 de position de la lumière 73 relativement à l'axe longitudinal X-X du mât de support, qui est également utilisable dans le premier mode de réalisation de l'invention.

Le dispositif de contrôle 10 de position de la lumière 73 comprend une première graduation 11 qui est marquée sur le mât de support 22 et une deuxième graduation 12 qui est marquée sur l'arbre d'entrainement 80. La première graduation 11 et la deuxième graduation 12 permettent de repérer visuellement la position de la lumière 73 relativement à l'axe longitudinal X-X du mât de support, sachant que le mât de support 22 est incliné par rapport à la surface de jonction S1.

L'appareillage de mesure 1 selon le premier mode de réalisation ou selon le deuxième mode de réalisation facilite la réalisation d'opérations de mesure en milieu radioactif, réalisées au moyen du détecteur 3 et de l'appareil de collimation 2, tout en limitant l'exposition d'un opérateur à un environnement radioactif, la masse et l'encombrement de l'appareillage de mesure 1.

La mobilité en rotation de la deuxième pièce 6 relativement à la première pièce 7 accroît le champ d'observation du détecteur 3, sachant que par ailleurs le mât de raccordement 22 peut être déplacé en translation et/ou en rotation par un opérateur ou par télé-opération.

Le champ d'observation du détecteur 3 est accru du fait que l'angle β formé par la surface de jonction S1 avec l'axe longitudinal X-X du mât de raccordement et que l'angle α entre la lumière 73 et la surface de jonction S1 sont faibles et non nuls.

La forme partiellement sphérique de la tête 5 permet d'en optimiser la masse et l'encombrement. Par ailleurs, la tête 5 a une forme géométrique simple, ce qui la rend plus facile à fabriquer et à décontaminer.

Du fait de la fabrication de la peau extérieure 52 dans le premier matériau, la tête 5 présente une résistance mécanique satisfaisante. Par ailleurs, la tête 5 protège le détecteur 3 contre les radiations du fait de la portion interne 54 dans le deuxième matériau de blindage.

Bien entendu, diverses modifications peuvent être apportées par l'homme du métier à l'invention qui vient d'être décrite sans sortir du cadre de l'exposé de l'invention.

En variante, l'appareillage 1 peut être un appareillage de support d'un instrument et qui est configuré pour protéger et/ou isoler au moins partiellement l'instrument 3 mécaniquement, radiologiquement, thermiquement, chimiquement, bactériologiquement, électriquement et/ou magnétiquement.

En variante, l'appareillage 1 comprend un instrument 3 qui est distinct d'un détecteur, tel qu'un outil de prélèvement, de nettoyage et/ou de décontamination.

L'instrument 3 peut être logé en majorité dans la deuxième pièce 7, notamment dans la lumière 73. Il peut être fixé à la deuxième pièce 7, par exemple lorsque l'instrument 3 est un télémètre, une caméra et/ou un outil de prélèvement.

Lorsque l'appareillage 1 est dépourvu de fonction d'isolation radiologique, électrique et/ou magnétique, la tête 5 de l'appareillage 1 est dépourvue de matériau de blindage. En particulier, elle peut être dépourvue de portion interne 54 et ne comporter qu'une peau extérieure 52, pour limiter la masse et l'encombrement de l'appareillage 1.

La tête 5 peut être de formes et de dimensions variables, en particulier de forme et de dimension adaptées à une ouverture d'introduction de la tête 5. La tête 5 est par exemple cylindrique au lieu d'être partiellement sphérique. La tête 5 peut être entièrement ou presque entièrement sphérique.

En variante, la première pièce 6 est articulée relativement au mât de support 22, au lieu d'être rigidement solidaire du mât de support 22. Différents types de liaisons mécaniques sont possibles entre la tête 5 et le mât de support 22, par exemple par brasage, soudage, emboitement élastique, etc.

La deuxième pièce 7 peut être mobile par rapport à la première pièce 6 selon un mouvement complexe, qui comprend de préférence au moins un mouvement de rotation. La deuxième pièce 7 est par exemple mobile selon une liaison hélicoïdale relativement à la première pièce 6.

La tête 5 peut être fabriquée sans fabrication additive, notamment par fonderie lorsqu'elle est réalisée dans un seul matériau constitutif, typiquement le premier matériau.

Lorsque l'instrument 3 est un outil de prélèvement, la lumière 73 est un orifice de prélèvement. Lorsque l'instrument 3 est un outil de nettoyage et/ou de décontamination, la lumière 73 est un orifice de projection.

La lumière 73 peut avoir des formes variables. En particulier, elle peut former une ouverture conique et/ou tronconique débouchant dans la cavité centrale 51. Les dimensions de la lumière 73 peuvent varier, en prévoyant par exemple des deuxièmes pièces 7 interchangeables pour une seule première pièce 6. Des pièces complémentaires à la lumière 73, telles que des entretoises, peuvent également être insérées de manière à modifier la forme ou les dimensions de la lumière 73.

Le dispositif de contrôle 10 de position de la lumière peut être configuré pour repérer automatiquement la position relative de la lumière 73 par rapport à l'axe longitudinal X-X de l'appareillage 1. Il comprend par exemple une unité de commande (non représentée) qui peut être en dehors de la tête 5.

## Revendications

1. Tête (5) de logement d'un instrument (3), la tête (5) étant au moins partiellement sphérique, la tête (5) comprenant :
une première pièce (6) comprenant un corps (60) et un embout de raccordement (62), l'embout de raccordement (62) étant configuré pour solidariser rigidement la première pièce (6) à un mât de support (22), et
une deuxième pièce (7) comprenant une calotte sphérique, la deuxième pièce (7) comprenant une lumière (73) débouchant sur l'extérieur de la tête (5), la lumière (73) débouchant dans un logement (50) apte à loger l'instrument (3), le logement (50) étant situé à l'intérieur de la tête (5),
la deuxième pièce (7) étant mobile au moins en rotation par rapport à la première pièce (6) autour d'un axe de rotation (R-R) qui est conçu pour être incliné par rapport à un axe longitudinal (X-X) du mât de support (22),
le corps (60) ayant une forme de sphère tronquée par une surface de jonction (S1) de la deuxième pièce à la première pièce qui est sensiblement plane,
la surface de jonction (S1) étant inclinée par rapport à un axe longitudinal (X-X) du mât de support (22), et/ou l'axe longitudinal (Y-Y, Y1-Y1, Y2-Y2) de la lumière (73) étant incliné par rapport à la surface de jonction (S1).

2. Tête (5) selon la revendication précédente, dans laquelle la première pièce (6) comprend un hémisphère et la deuxième pièce (7) comprend un hémisphère, et/ou l'embout de raccordement (62) a une forme cylindrique,
l'axe longitudinal de l'embout de raccordement (62) étant de préférence conçu pour être parallèle à l'axe longitudinal du mât de support (22).

3. Tête (5) selon l'une quelconque des revendications précédentes, dans laquelle la lumière (73) est délimitée par une surface de révolution, préférentiellement un cône, un tronc de cône ou un cylindre circulaire droit.

4. Tête (5) selon l'une quelconque des revendications précédentes, dans laquelle, la lumière (73) débouche dans le logement (50) sensiblement au centre (51) de la tête (5) et/ou la lumière (73) constitue le logement pour l'instrument (3).

5. Tête (5) selon l'une quelconque des revendications précédentes, dans lequel l'axe longitudinal (Y-Y, Y1-Y1, Y2-Y2) de la lumière (73) est destiné à être sécant avec l'axe longitudinal (X-X) du mât de support (22) et/ou un axe perpendiculaire à la surface de jonction (S1) est conçu pour être incliné par rapport à l'axe longitudinal du mât de support (22).

6. Tête (5) selon l'une quelconque des revendications précédentes, dans laquelle l'axe longitudinal (Y-Y, Y1-Y1, Y2-Y2) de la lumière est conçu pour être incliné par rapport à la surface de jonction (S1) d'un angle (α) qui est compris entre 25 et 155°, de préférence entre 25° et 85 et entre 95° et 155°, très préférablement sensiblement 25°, et/ou
dans lequel la surface de jonction (S1) est conçu pour être inclinée par rapport à l'axe longitudinal (X-X) du mât de support d'un angle (β) qui est compris entre 25 et 155°, de préférence entre 25° et 85° et entre 95° et 155°, très préférablement sensiblement 25°,
l'angle (α) d'inclinaison de l'axe longitudinal (Y-Y, Y1-Y1, Y2-Y2) de la lumière par rapport à la surface de jonction (S1) étant de préférence sensiblement égal à l'angle d'inclinaison (β) de la surface de jonction (S1) relativement au mât de support (22).

7. Tête selon l'une quelconque des revendications 1 à 6, la première pièce (6) et/ou la deuxième pièce (7) comprenant un matériau de blindage contre un rayonnement radioactif tel qu'un rayonnement X et/ou un rayonnement gamma, et/ou un matériau d'isolation thermique, chimique, bactériologique, électrique et/ou magnétique.

8. Appareil comprenant une tête (5) selon l'une quelconque des revendications précédentes, un mât de support (22) et un actionneur (80, 82) configuré pour déplacer la deuxième pièce (7) relativement à la première pièce (6).

9. Appareil selon la revendication 7, dans lequel l'actionneur (80, 82) comprend un arbre d'entrainement (80) dont l'axe longitudinal est destiné à être parallèle à l'axe longitudinal (X-X) du mât de support.

10. Appareil selon la revendication 7 ou la revendication 8, dans lequel l'actionneur (80, 82) comprend un dispositif de transmission (82), le dispositif de transmission (82) comprenant un engrenage à renvoi d'angle, notamment un engrenage conique.

11. Appareil selon l'une quelconque des revendications 7 à 9, dans lequel l'actionneur (80, 82) comprend un dispositif de transmission (82), le dispositif de transmission (82) comprenant un premier élément de transmission (84) et un deuxième élément de transmission (86),
le premier élément de transmission (84) étant logé dans la première pièce (6), et/ou le deuxième élément de transmission (86) étant rigidement solidaire de la deuxième pièce (7).

12. Appareil selon l'une quelconque des revendications 7 à 10, comprenant un dispositif de contrôle (10) de position de la lumière (73) relativement à l'axe longitudinal (X-X) du mât de support.

13. Appareillage de contrôle (1), comprenant :
une tête (5) selon l'une quelconque des revendications 1 à 6 ou un appareil selon l'une quelconque des revendications 7 à 11, l'appareil étant notamment un appareil de collimation, et
un instrument de mesure (3) qui est logé dans le logement (50) de la tête (5), l'instrument de mesure (3) comprenant un détecteur, notamment un détecteur de rayonnement X et/ou un détecteur de rayonnement gamma.

14. Appareillage de contrôle (1) selon la revendication précédente, dans lequel le détecteur s'étend à l'intérieur de la tête (5), de manière à ce que l'axe longitudinal du détecteur soit parallèle à l'axe longitudinal (X-X) du mât de support (22), et/ou
dans lequel l'appareillage de contrôle (1) comprend un moyen d'alimentation électrique ou de transmission de signal (30) du détecteur, qui s'étend à l'intérieur de la tête (5) sensiblement le long de l'axe longitudinal (X-X) du mât de support.

15. Procédé de fabrication d'une tête (5) selon l'une quelconque des revendications 1 à 6 ou d'un appareil selon l'une quelconque des revendications 7 à 11, dans lequel la tête (5) est réalisée dans au moins un premier matériau et un deuxième matériau, le premier matériau étant plus résistant mécaniquement que le deuxième matériau et le premier matériau étant situé autour du deuxième matériau,
le procédé de fabrication comprenant une étape de fabrication d'une peau extérieure (52) de la tête dans le premier matériau, préférablement par fabrication additive.

16. Procédé de fabrication selon la revendication précédente, dans lequel le deuxième matériau est un matériau de blindage contre un rayonnement radioactif, tel qu'un rayonnement X et/ou un rayonnement gamma,
le premier matériau comprenant de préférence de l'acier inoxydable, et/ou
le deuxième matériau comprenant de préférence du plomb, du cuivre et/ou du tungstène.

## Patentansprüche

1. Kopf (5) zur Aufnahme eines Instruments (3), wobei der Kopf (5) zumindest teilweise kugelförmig ist, wobei der Kopf (5) Folgendes umfasst:
einen ersten Teil (6), der einen Körper (60) und ein Verbindungsstück (62), wobei ein Verbindungsstück (62) so konfiguriert ist, dass es den ersten Teil (6) starr mit einem Stützstange (22) verbindet, und
einen zweiten Teil (7), der eine Kugelkappe umfasst, wobei der zweite Teil (7) eine Leuchte (73) enthält, die in die Außenseite des Kopfes (5) mündet, wobei die Leuchte (73) in eine Aufnahme (50) mündet, die ausgelegt ist, das Instrument (3) aufzunehmen, wobei sich die Aufnahme (50) im Inneren des Kopfes (5) befindet,
wobei der zweite Teil (7) in Bezug zu dem ersten Teil (6) um eine Drehachse (R-R) zumindest drehbar ist, die so konzipiert ist, dass sie in Bezug zu einer Längsachse (X-X) der Stützstange (22) angewinkelt ist,
wobei der Körper (60) die Form einer Kugel hat, die durch eine im Wesentlichen ebene Verbindungsfläche (S1) des zweiten Teils mit dem ersten Teil abgeschnitten ist,
wobei die Verbindungsfläche (S1) in Bezug zu einer Längsachse (X-X) der Stützstange (22) und/oder die Längsachse (Y-Y, Y1-Y1, Y2-Y2) der Leuchte (73) in Bezug zu der Verbindungsfläche (S1) angewinkelt ist.

2. Kopf (5) nach dem vorhergehenden Anspruch, wobei der erste Teil (6) eine Halbkugel umfasst und der zweite Teil (7) eine Halbkugel umfasst, und/oder das Verbindungsstück (62) eine zylindrische Form hat,
wobei die Längsachse des Verbindungsstücks (62) vorzugsweise zylindrisch konzipiert ist, so dass sie parallel zur Längsachse der Stützstange (22) verläuft.

3. Kopf (5) nach einem der vorhergehenden Ansprüche, wobei die Leuchte (73) durch eine Rotationsoberflache, vorzugsweise einen Kegel, einen Kegelstumpf oder einen geraden Kreiszylinder, begrenzt wird.

4. Kopf (5) nach einem der vorhergehenden Ansprüche, wobei die Leuchte (73) im Wesentlichen in der Mitte (51) des Kopfes (5) in die Aufnahme (50) mündet und/oder die Leuchte (73) die Aufnahme für das Instrument (3) bildet.

5. Kopf (5) nach einem der vorhergehenden Ansprüche, wobei die Längsachse (Y-Y, Y1-Y1, Y2-Y2) der Leuchte (73) dazu bestimmt ist, sekant mit der Längsachse (X-X) der Stützstange (22) zu sein, und/oder eine zu der Verbindungsfläche (S1) senkrechten Achse so konzipiert ist, dass sie in Bezug zu der Längsachse der Stützstange (22) angewinkelt ist.

6. Kopf (5) nach einem der vorhergehenden Ansprüche, wobei die Längsachse (Y-Y, Y1-Y1, Y2-Y2) der Leuchte so konzipiert ist, dass sie in Bezug zu der Verbindungsfläche (S1) um einen Winkel (α) angewinkelt ist, der zwischen 25° und 155°, vorzugsweise zwischen 25° und 85° und zwischen 95° und 155°, sehr bevorzugt im Wesentlichen 25°, liegt, und/oder
wobei die Verbindungsfläche (S1) so konzipiert ist, dass sie in Bezug zu der Längsachse (X-X) der Stützstange um einen Winkel (β) angewinkelt ist, der zwischen 25° und 155°, vorzugsweise zwischen 25° und 85° und zwischen 95° und 155°, sehr bevorzugt im Wesentlichen 25°, liegt,
wobei der Neigungswinkel (α) der Längsachse (Y-Y, Y1-Y1, Y2-Y2) des Leuchte in Bezug zu der Verbindungsfläche (S1) vorzugsweise im Wesentlichen gleich dem Neigungswinkel (β) der Verbindungsfläche (S1) in Bezug zu der Stützstange (22) ist.

7. Kopf nach einem der Ansprüche 1 bis 6, wobei der erste Teil (6) und/oder der zweite Teil (7) ein Material zur Abschirmung von radioaktiver Strahlung, wie etwa Röntgenstrahlung und/oder Gammastrahlung, und/oder ein Material zur thermischen, chemischen, bakteriologischen, elektrischen und/oder magnetischen Isolierung umfasst.

8. Gerät, das einen Kopf (5) nach einem der vorhergehenden Ansprüche, eine Stützstange (22) und ein Stellglied (80, 82) umfasst, das konfiguriert ist, den zweiten Teil (7) in Bezug zu dem ersten Teil (6) zu verschieben.

9. Gerät nach Anspruch 7, wobei das Stellglied (80, 82) eine Antriebswelle (80) umfasst, deren Längsachse dazu bestimmt ist, parallel zur Längsachse (X-X) der Stützstange zu sein.

10. Gerät nach Anspruch 7 oder Anspruch 8, wobei das Stellglied (80, 82) eine Getriebevorrichtung (82) umfasst, wobei die Getriebevorrichtung (82) ein Winkelgetriebe, insbesondere ein Kegelradgetriebe, umfasst.

11. Gerät nach einem der Ansprüche 7 bis 9, wobei das Stellglied (80, 82) eine Getriebevorrichtung (82) umfasst, wobei die Getriebevorrichtung (82) ein erstes Getriebeelement (84) und ein zweites Getriebeelement (86) umfasst,
wobei das erste Getriebeelement (84) in dem ersten Teil (6) untergebracht ist und/oder das zweite Getriebeelement (86) starr mit dem zweiten Teil (7) verbunden ist.

12. Gerät nach einem der Ansprüche 7 bis 10, umfassend eine Kontrollvorrichtung (10) für die Position der Leuchte (73) relativ zur Längsachse (X-X) der Stützstange.

13. Kontrolleinrichtung (1), umfassend:
einen Kopf (5) nach einem der Ansprüche 1 bis 6 oder ein Gerät nach einem der Ansprüche 7 bis 11, wobei es sich bei dem Gerät insbesondere um ein Kollimationsgerät handelt, und
ein Messinstrument (3), das in der Aufnahme (50) des Kopfes (5) untergebracht ist, wobei das Messinstrument (3) einen Detektor, insbesondere einen Röntgenstrahlungsdetektor und/oder einen Gammastrahlungsdetektor, umfasst.

14. Kontrolleinrichtung (1) nach dem vorhergehenden Anspruch, wobei sich der Detektor im Inneren des Kopfes (5) derart erstreckt, dass die Längsachse des Detektors parallel zur Längsachse (X-X) der Stützstange (22) verläuft, und/oder
wobei die Kontrolleinrichtung (1) ein Mittel zur Stromversorgung oder Signalübertragung (30) des Detektors umfasst, das sich im Inneren des Kopfes (5) im Wesentlichen entlang der Längsachse (X-X) der Stützstange erstreckt.

15. Herstellungsverfahren für einen Kopf (5) nach einem der Ansprüche 1 bis 6 oder ein Gerät nach einem der Ansprüche 7 bis 11, wobei der Kopf (5) aus mindestens einem ersten Material und einem zweiten Material hergestellt wird, wobei das erste Material mechanisch widerstandsfähiger ist als das zweite Material und das erste Material um das zweite Material herum angeordnet ist,
wobei das Herstellungsverfahren einen Schritt zum Herstellen einer Außenhaut (52) des Kopfes aus dem ersten Material, vorzugsweise durch additive Fertigung, umfasst.

16. Herstellungsverfahren nach dem vorhergehenden Anspruch, wobei das zweite Material ein Material zur Abschirmung gegen radioaktive Strahlung, wie etwa Röntgenstrahlung und/oder Gammastrahlung, ist,
wobei das erste Material vorzugsweise rostfreien Stahl umfasst, und/oder
das zweite Material vorzugsweise Blei, Kupfer und/oder Wolfram umfasst.

## Claims

1. A head (5) for housing an instrument (3), wherein the head (5) is at least partially spherical, wherein the head (5) comprises:
a first part (6), wherein the first part (6) comprises a body (60) and a connecting end piece (62), wherein the connecting end piece (62) is configured to rigidly secure the first part (6) to a support pole (22), and
a second part (7), wherein the second part (7) comprises a spherical cap and a port (73) opening outwardly of the head (5), wherein the port (73) opens into a housing (50) capable of housing the instrument (3), wherein the housing (50) is located inside the head (5),
wherein the second part (7) is at least rotationally movable with respect to the first part (6) about an axis of rotation (R-R), wherein the axis of rotation (R-R) is configured to be tilted with respect to a longitudinal axis (X-X) of the support pole (22),
wherein the body (60) has a sphere shape which is truncated by a junction surface (S1) from the second part to the first part which is substantially planar,
wherein the junction surface (S1) is tilted with respect to a longitudinal axis (X-X) of the support pole (22), and/or wherein the longitudinal axis (Y-Y, Y1-Y1, Y2-Y2) of the port (73) is tilted with respect to the junction surface (S1).

2. The head (5) according to the previous claim, wherein the first part (6) comprises a hemisphere and the second part (7) comprises a hemisphere, and/or wherein the connecting end piece (62) has a cylindrical shape,
wherein the longitudinal axis of the connecting end piece (62) is preferably configured to be parallel to the longitudinal axis of the support pole (22).

3. The head (5) according to any of the previous claims, wherein the port (73) is delimited by a surface of revolution, preferably a cone, a cone frustrum or a straight circular cylinder.

4. The head (5) according to any of the previous claims, wherein the port (73) opens into the housing (50) substantially at the centre (51) of the head (5) and/or wherein the port (73) constitutes the housing for the instrument (3).

5. The head (5) according to any of the previous claims, wherein the longitudinal axis (Y-Y, Y1-Y1, Y2-Y2) of the port (73) is configured to intersect the longitudinal axis (X-X) of the support pole (22) and/or wherein an axis perpendicular to the junction surface (S1) is configured to be tilted with respect to the longitudinal axis of the support pole (22).

6. The head (5) according to any of the previous claims, wherein the longitudinal axis (Y-Y, Y1-Y1, Y2-Y2) of the port is configured to be tilted with respect to the junction surface (S1) by an angle (α) which is between 25 and 155°, preferably between 25° and 85 and between 95° and 155°, highly preferably substantially 25°, and/or
wherein the junction surface (S1) is configured to be tilted with respect to the longitudinal axis (X-X) of the support pole by an angle (β) which is between 25° and 155°, preferably between 25° and 85° and between 95° and 155°, highly preferably substantially 25°,
wherein the tilt angle (α) of the longitudinal axis (Y-Y, Y1-Y1, Y2-Y2) of the port relative to the junction surface (S1) is preferably substantially equal to the tilt angle (β) of the junction surface (S1) relative to the support pole (22).

7. The head according to any of claims 1 to 6, wherein the first part (6) and/or the second part (7) comprises a shielding material against radioactive radiation such as X-radiation and/or gamma radiation, and/or a thermal, chemical, bacteriological, electrical and/or magnetic insulation material.

8. An apparatus comprising a head (5) according to any of the previous claims, a support pole (22) and an actuator (80, 82) configured to move the second part (7) relative to the first part (6).

9. The apparatus according to claim 7, wherein the actuator (80, 82) comprises a drive shaft (80), wherein the longitudinal axis of the drive shaft (80) is to be parallel to the longitudinal axis (X-X) of the support pole.

10. The apparatus according to claim 7 or claim 8, wherein the actuator (80, 82) comprises a transmission device (82), wherein the transmission device (82) comprising an angle transmission gear, especially a bevel gear.

11. The apparatus according to any of claims 7 to 9, wherein the actuator (80, 82) comprises a transmission device (82), wherein the transmission device (82) comprises a first transmission element (84) and a second transmission element (86),
wherein the first transmission element (84) is housed in the first part (6), and/or wherein the second transmission element (86) is rigidly integral with the second part (7).

12. The apparatus according to any of claims 7 to 10, comprising a device (10) for controlling the position of the port (73) relative to the longitudinal axis (X-X) of the support pole.

13. A control equipment (1), comprising:
a head (5) according to any of claims 1 to 6 or an apparatus according to any of claims 7 to 11, wherein the apparatus is especially a collimation apparatus, and
a measurement instrument (3) which is housed in the housing (50) of the head (5), wherein the measurement instrument (3) comprises a detector, especially an X-radiation detector and/or a gamma radiation detector.

14. The control equipment (1) according to the previous claim, wherein the detector extends inside the head (5), so that the longitudinal axis of the detector is parallel to the longitudinal axis (X-X) of the support pole (22), and/or
wherein the control equipment (1) comprises a power supply or signal transmission means (30) for the detector, which extends inside the head (5) substantially along the longitudinal axis (X-X) of the support pole.

15. A method for manufacturing a head (5) according to any of claims 1 to 6 or an apparatus according to any of claims 7 to 11, wherein the head (5) is made of at least a first material and a second material, wherein the first material is stronger mechanically than the second material and wherein the first material is located around the second material,
the manufacturing method comprising a step of manufacturing an external skin (52) of the head from the first material, preferably by additive manufacturing.

16. The manufacturing method according to the previous claim, wherein the second material is a shielding material against radioactive radiation, such as X-radiation and/or gamma radiation,
wherein the first material preferably comprises stainless steel, and/or
wherein the second material preferably comprises lead, copper and/or tungsten.
